**Europäisches Patentamt**

**European Patent Office**

**Office européen des brevets**

(19)

(11) Veröffentlichungsnummer: **0 203 888**

**A1**

(12) # EUROPÄISCHE PATENTANMELDUNG

(21) Anmeldenummer: **86810211.2**

(22) Anmeldetag: **12.05.86**

(51) Int. Cl.⁴: **B 23 Q 3/10**

(30) Priorität: **20.05.85 CH 2139/85**

(43) Veröffentlichungstag der Anmeldung: **03.12.86**
**Patentblatt 86/49**

(84) Benannte Vertragsstaaten: **DE FR GB IT SE**

(71) Anmelder: **ISTEMA Industrielle Elektrotechnik und Mechanik AG, Stansstaderstrasse 104, CH-6370 Stans (CH)**

(72) Erfinder: **Herzog, Peter, Schulgässli 3, CH-6374 Buochs (CH)**
Erfinder: **Laubacher, Otto, Hausmatt 9, CH-6370 Stans (CH)**

(74) Vertreter: **Steiner, Martin, c/o AMMANN PATENTANWAELTE AG BERN Schwarztorstrasse 31, CH-3001 Bern (CH)**

(54) **Bausatz zur Montage von Teilen und Verwendung desselben.**

(57) Der Bausatz weist Basisteile (16) zur festen Montage auf eine Unterlage (25), Führungsteile (19) mit einer Führungsbahn (20) zur einstellbaren Montage von Zwischen- oder Anpassungsteilen (21) sowie Träger (5, 28, 30) zum wahlweisen Kuppeln mit einem Basisteil (16) oder Anpassungsteil (21) auf. Die verschiedenen Teile sind mit Kupplungsmitteln (2, 10) versehen, die ein einfaches Kuppeln der Teile in eindeutig bestimmter gegenseitiger Lage und Orientierung gestatten. Damit ist der Aufbau praktisch beliebiger Montagekonstruktionen (16, 19, 21) äusserst einfach und rasch durchzuführen, und Träger (5, 28, 30) mit Werkstücken (27, 29, 31) oder dergleichen können mit der Montagekonstruktion ebenfalls sehr einfach und schnell in eindeutig vorgegebener Position und Orientierung verbunden werden.

## Bausatz zur Montage von Teilen und Verwendung desselben

Die vorliegende Erfindung betrifft einen Bausatz zur Montage von Teilen, insbesondere von Werkstücken, vor allem in Elektroerosionsmaschinen, mit auf einer Basis fest montierbaren Basisteilen, die in eindeutiger Lage und Orientierung mit Trägern für die Teile kuppelbar sind.

Ein solcher Bausatz von kuppelbaren Teilen ist bekannt aus der US-PS 3 271 848. Dieser Bausatz eignet sich bestens beispielsweise zur Montage von Werkstücken und Bearbeitungselektroden an Elektroerosionsmaschinen. Die Verwendung von in eindeutiger Lage und Orientierung kuppelbaren Basisteilen und Trägern, die fest mit der Maschine bzw. mit dem zu bearbeitenden Teil oder einem Werkzeug verbunden sind, hat den besonderen Vorteil, dass die Verbindung der Werkstücke oder Werkzeuge mit einem Träger in eindeutig vorbestimmter Lage ausserhalb der Maschine stattfinden kann, worauf diese Werkstücke oder Werkzeuge durch einen einfachen Kuppelvorgang in eindeutig vorbestimmter Lage in die Maschine eingesetzt werden können, indem der Träger mit dem an der Maschine befestigten Baisteil gekuppelt wird. Damit lassen sich längere Einrichtungszeiten an der Maschine und damit entsprechend hohe Stillstandzeiten derselben vermeiden.

Der bekannte Bausatz zur Montage von Teilen, insbesondere in Funkenerosionsmaschinen, ist jedoch recht einseitig hinsichtlich der Wahl der Lage des zu montierenden Teiles bezüglich der vorhandenen Montageunterlage der Maschine. Ziel vorliegender Erfindung ist es, mittels weniger einfacher und genormter Teile die Möglichkeiten der Montage von Teilen bezüglich einer Montageunterlage der Maschine entscheidend zu erweitern, ohne die rasche Auswechselbarkeit zu verlieren, welche den bekannten Bausatz auszeichnet. Dieses Ziel wird erfindungsgemäss dadurch erreicht, dass Anpassteile vorgesehen sind, die zwischen Basisteile und Träger einsetzbar und mit denselben in eindeutiger Lage und Orientierung kuppelbar sind. Es können mit diesem Bausatz einfach und rasch verschiedensten Anforderungen genügende Aufbauten erstellt werden, welche die Montage von Teilen, insbesondere Werkstücken, in beliebiger Lage und Orientierung bezüglich einer Montageunterlage der Maschine gestatten.

Es ist zwar bekannt, eine entsprechende Aufgabe mittels Montageelementen zu lösen, welche kreuzschlittenartig gegeneinander verschiebbar sind. Der Aufbau von Montagekonstruktionen mittels dieses bekannten Bausatzes ist jedoch weit umständlicher und zeitraubender, und es fehlt die schnelle Auswechselbarkeit montierter Teile.

Die Erfindung wird nun anhand der Zeichnung näher erläutert, welche ein Ausführungsbeispiel des Bausatzes sowie Verwendungsbeispiele desselben zeigt.

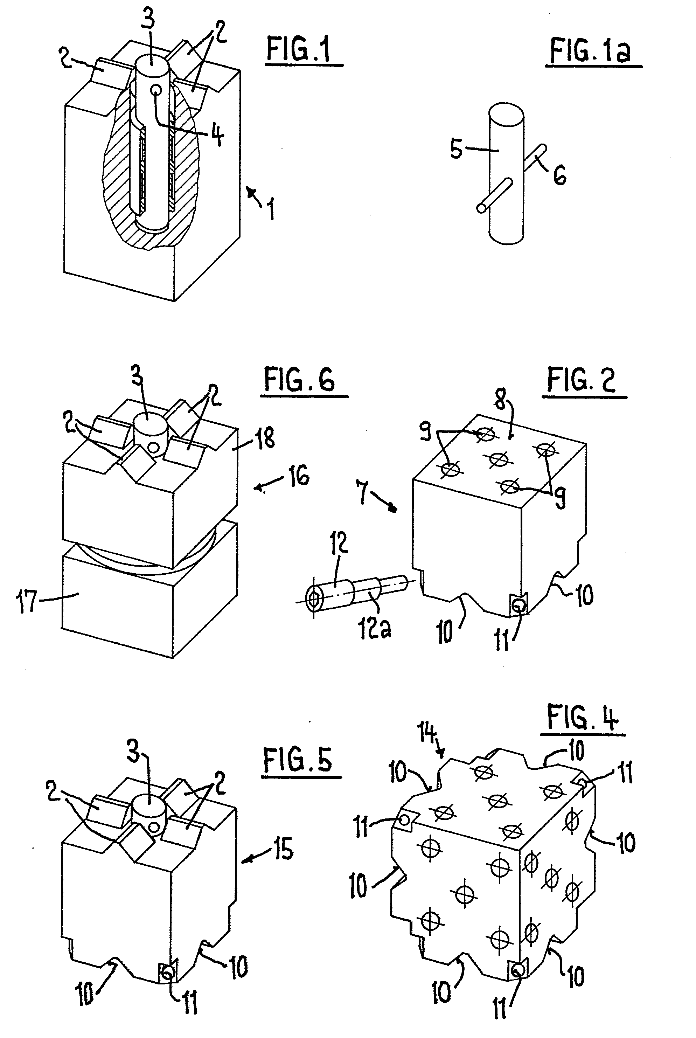

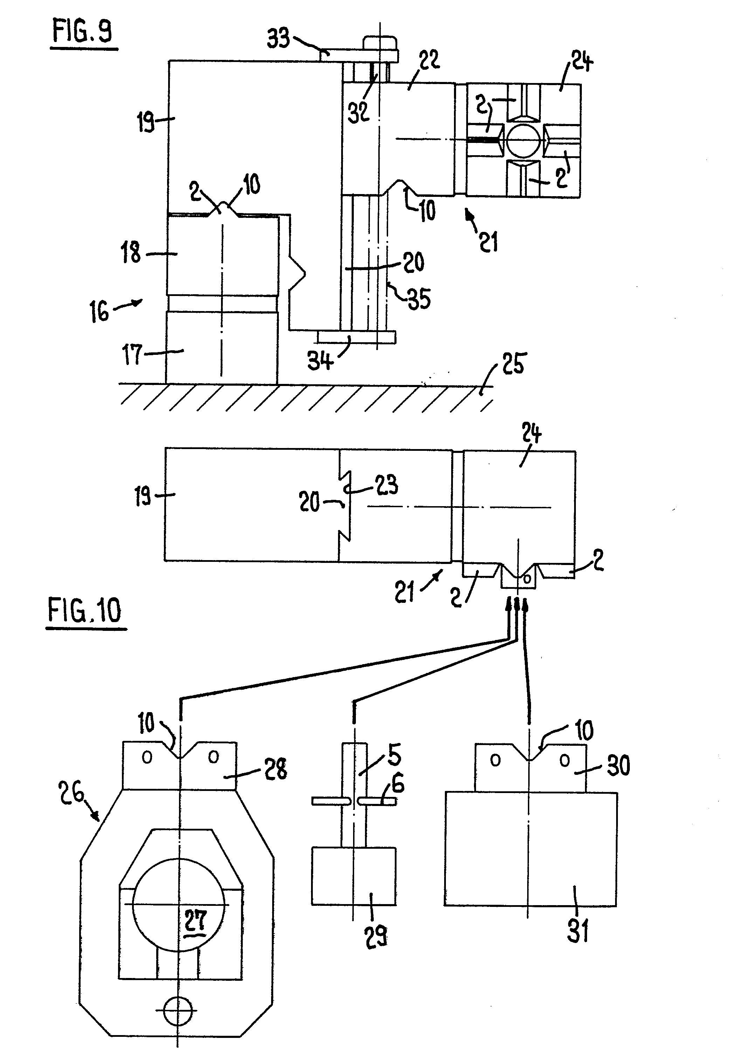

Figuren 1 bis 8 sind räumliche Darstellungen von Basisteilen, Anpassteilen und Führungsteilen des Bausatzes, und Figuren 9 bis 17 zeigen Verwendungsbeispiele sowie weitere Einzelteile des Bausatzes.

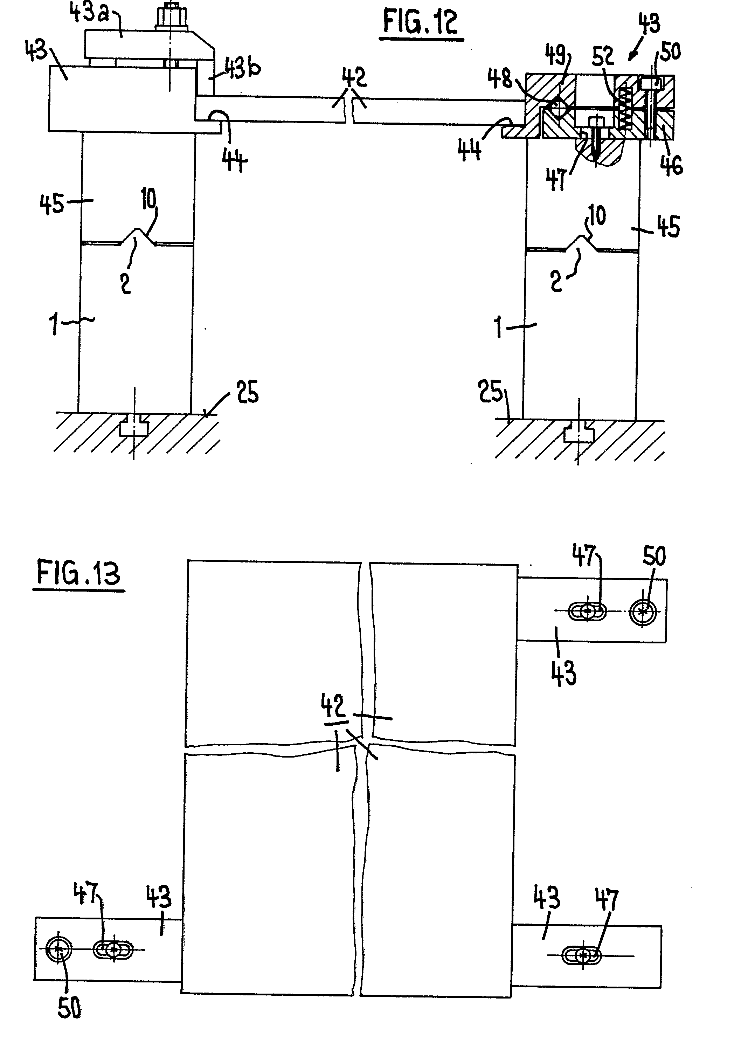

Figur 1 zeigt einen ersten Basisteil oder -block 1, der mit nicht näher dargestellten Mitteln versehen ist, um mit seiner Unterseite auf eine Montageunterlage, beispielsweise gemäss Figur 12 auf einen Nutentisch einer Bearbeitungsmaschine oder Werkzeugmaschine, insbesondere einer Elektroerosionsmaschine, montiert zu werden. Der Basisteil 1 weist an seiner Oberseite kreuzweise angeordnete, genau bearbeitete Prismen 2 auf, die der Kupp-

lung des Teils 1 mit anderen Teilen des Bausatzes in eindeutig bestimmter Lage und Orientierung dienen. Solche Kupplungsmittel sind aus der oben erwähnten US-PS 3 271 848 bekannt und bedürfen keiner näheren Erläuterung. In einer zentralen Bohrung des Teils 1 ist ein Kupplungsbolzen 3 befestigt, der eine Querbohrung 4 zur Aufnahme eines Kupplungsstiftes aufweist. Anstelle des Kupplungsbolzens 3 kann in die Bohrung des Teils 1 ein in Fig. 1a dargestellter Montageschaft 5 eingeführt und darin festgespannt werden, wobei die Lage des Montageschaftes 5 durch einen Orientierungsstift 6 der bei eingesetztem Schaft 5 gegen in derselben Ebene liegende Flanken zweier gegenüberliegender Prismen 2 anliegt, bestimmt wird.

Figur 2 zeigt einen ersten Anpassteil oder -block 7. Dieser Block weist an der Oberseite eine genau planbearbeitete Auflage oder Anschlagfläche 8 auf, die der genauen Verbindung oder Auflage eines weiteren Teils auf dem Teil 7 dient. An der Oberseite des Teils 7 sind auch Gewindebohrungen 9 zum einsetzen von Befestigungsschrauben vorgesehen. An der Unterseite weist der Teil 7 kreuzweise angeordnete prismatische Nuten 10 auf, die beim Aufsetzen des Teils 7 auf den Teil 1 spielfrei auf die Prismen 2 des Teils 1 aufliegen und damit die gegenseitige Lage und Orientierung der Teile 1 und 7 eindeutig bestimmen. Es sind allerdings hierbei 4 um je 90$^{\circ}$ versetzte, gegenseitige Kupplungsstellungen möglich, da die Prismen 2 und Nuten 10 völlig symmetrisch und alle gleich bemessen sind. Der Anpassteil 7 weist diagonal verlaufende Bohrungen 11 auf, in welche ein in Figur 2 angedeuteter Kupplungsbolzen 12 mit Spannexzenter 12a eingeführt werden kann, wobei der Exzenter 12a in die Querbohrung 4 des Kupplungsbolzens 3 eingreift. Durch Drehen des Kupplungsbolzens 12 mittels eines Schlüssels können die Teile 1 und 7 gegeneinander gespannt und damit in bestimmter Position verbunden werden. Für Einzel-

- 4 -                    0203888

heiten dieses Kupplungssystems und pneumatische oder hydraulische Varianten desselben wird auf die oben erwähnte US-PS 3 271 848 verwiesen.

Figur 3 zeigt einen Anpassteil 13, der grundsätzlich ähnlich aufgebaut ist wie der Teil 1, jedoch nicht zur Montage auf eine Unterlage einer Maschine dient, sondern als Zwischenteil zum Aufbau einer bestimmten Halterung für ein Werkstück oder dergleichen. Dieser Anpassteil 13 weist an 2 rechtwinklig zueinanderstehenden Flächen Kupplungsmittel, nämlich Prismen 2 bzw. Nuten 10 auf. Dieser Teil 13 kann im einfachsten Fall etwa als Zwischenglied zwischen Teilen 1 und 7 dienen, indem er auf den auf der Maschine befestigten Teil 1 aufgesetzt und damit gekuppelt wird, worauf der Teil 7 auf den Kupplungsteil des Teils 13 aufgesetzt und festgespannt wird. Die ebenen Flächen des Teils 13 können mindestens teilweise auch genau plan bearbeitet sein, um als Auflageflächen für bestimmte Einrichtungsteile zu dienen.

Figur 4 zeigt einen weiteren Anpassteil 14, der sich vom Teil 13 dadurch unterscheidet, dass er auf drei rechtwinklig zueinander stehenden Flächen negative oder weibliche Kupplungsmittel, also Kupplungsnuten 10 aufweist, die zur Verbindung mit männlichen Kupplungsteilen anderer Teile bestimmt sind. Der Anpassteil 14 ist an verschiedenen Seiten mit Gewindebohrungen versehen, so dass andere Teile des Bausatzes, Werkstücke, Werkzeuge oder beiliebige andere Teile, daran direkt befestigt werden können.

Figur 5 zeigt einen Anpassteil 15, der lediglich als Distanzblock zu bezeichnen ist. Er weist an zwei gegenüberliegenden Seiten komplementäre Kupplungsmittel, nämlich an der Oberseite Prismen 2 und an der Unterseite Nuten 10 auf.

Figur 6 zeigt einen Basisteil 16, dessen Unterteil 17 funktionell im wesentlichen dem Teil 1 entspricht und dazu dient, auf eine Basis oder Unterlage der Maschine montiert zu werden. Auf diesem Unterteil 17 ist ein Oberteil 18 mit Kupplungsprismen 2 an der Oberseite mittels eines hochpräzisen Lagers frei drehbar oder eventuell zwischen bestimmten Anschlägen begrenzt drehbar gelagert. Der Teil 16 dient dazu, eine bezüglich der Maschine drehbare Halterung für einen zu montierenden Teil zu erstellen. Der Oberteil 18 kann einen in den Unterteil 17 ragenden Zapfen aufweisen, der mit einem Schneckenrad versehen ist, in welches eine von aussen drehbare Spindel zur Feineinstellung der Drehlage eingreift.

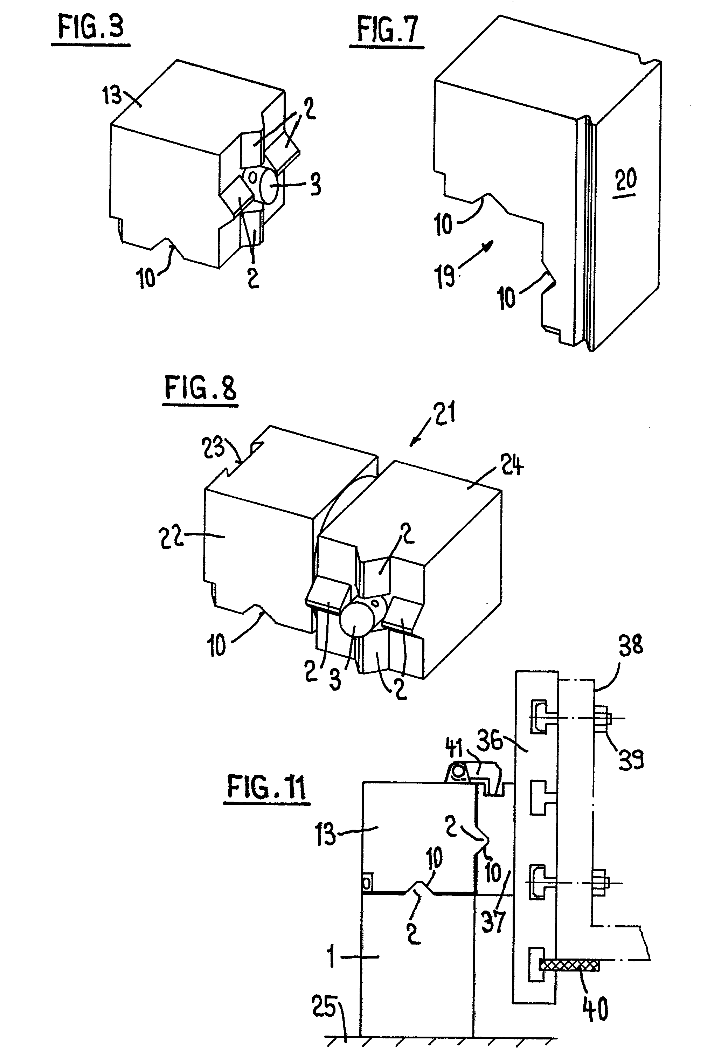

Figur 7 zeigt einen Führungsteil 19 in Form eines Winkels mit zwei senkrecht zueinander stehenden Schenkeln. An der Innenseite der beiden Schenkel sind Kupplungsmittel in Form von prismatischen Nuten 10 in rechtwinklig zueinander stehenden Ebenen angebracht. An einem der Schenkel, vorzugsweise dem längeren Schenkel, ist eine Schwalbenschwanz-Führungsbahn 20 vorgesehen. Auf diese Führungsbahn können mit einer Schwalbenschwanznut versehene Teile aufgeschoben und in beliebiger Stellung festgespannt werden. Der Teil 19 dient somit zur stufenlosen Anpassung einer bestimmten Stellung.

Figur 8 zeigt einen Anpassteil 21. Er weist einen ersten Block 22 mit einer Schwalbenschwanznut 23 und Kupplungsnuten 10 an einer senkrecht zur Nut 23 stehenden Fläche auf. Der Block 22 ist drehbar verbunden mit einem zweiten Block 24, dessen eine Seite mit Kupplungsprismen 2 versehen ist. Der Teil 21 kann nach Belieben auf einen Führungsteil 7 oder aber auf einen anderen Basisteil aufgesetzt werden, und auf seinen drehbaren Block 24 können weitere Teile des Bausatzes in bestimmter Lage aufgesetzt werden.

Im übrigen können all diese Teile auch etwas anders ausgebildet sein, indem mehr oder weniger Flächen derselben mit Kupplungsmitteln versehen sind und indem gewisse Befestigungsmittel in Kombination vorhanden sind. So könnte beispielsweise der Block 22 des Teils 21 nicht nur mit einer Schwalbenschwanznut 23 zum Aufsetzen dieses Teils auf den Teil 19 sondern auch mit Befestigungsmitteln zur direkten Befestigung auf einen Maschinenteil versehen sein. Der Block 24 des Teils 21 könnte beispielsweise auch an der in Figur 8 rechts liegenden Stirnseite mit Kupplungsprismen versehen sein. Dementsprechend kann es als mehr oder weniger willkürlich gelten, ob bestimmte Teile als Basisteile zur Befestigung an einem Maschinenteil, als Anpassteil zur Anordnung zwischen einem Basisteil und einem Zwischenteil oder schliesslich als Träger für ein Werkstück oder Werkzeug zu bezeichnen sind. Entscheidend ist, dass diese drei Funktionen in praktische beliebiger Kombination erfüllende Teile vorhanden sind. Die Figuren 9 und 10 zeigen in Seitenansicht bzw. Draufsicht ein erstes Verwendungsbeispiel des bisher beschriebenen Bausatzes. In diesem Falle ist ein Basisteil 16 mit seinem Unterteil 17 in nicht näher dargestellter Weise auf einer Unterlage 25, beispielsweise einem Maschinentisch, befestigt. Auf seinen drehbaren Oberteil 18 ist der Führungsteil 19 aufgesetzt. Auf die Führungsbahn 20 des Führungsteils 19 ist ein Teil 21 mit einem Block 22 aufgeschoben und kann in vertikaler Richtung eingestellt werden. Mit der in Figur 9 sichtbaren Kupplungsfläche des Blockes 24 können gemäss Figur 10 verschiedene Träger mit Werkstücken gekuppelt werden.

Figur 10 zeigt links eine Rahmenpalette 26 in der ein Werkstück 27 gehalten ist. Diese Rahmenpalette weist einen Kupplungsteil 28 mit Kupplungsnuten 10 auf, welcher wie in Figur 10 angedeutet mit den Kupplungsprismen 2 des Block 24 gekuppelt werden kann, wobei wiederum Spannmittel der anhand der Figuren 1 und 2 erläuterten Art vorgesehen sind. Eine Rahmenpalette der in Figur 10 schematisch dargestellten Art ist beispielsweise in der EP-OS 117 557 näher beschrieben. Statt dessen kann auch ein Montagebolzen 5 mit Orientierungsstift 6 gemäss Figur 1 eingesetzt und festgespannt werden, mit welchem ein Werkstück 29, beispielsweise eine zu bearbeitende Elektrode für die Elektroerosion, verlötet, verklebt oder sonstwie verbunden ist. Es kann aber auch wahlweise ein Träger 30 der in Figur 10 rechts dargestellten Art mit dem Block 24 gekuppelt werden. Dieser Träger 30 entspricht weitgehend den Trägern wie sie in der US-PS 3 271 848 beschrieben sind. Er ist mit einem Werkstück 31 verbunden.

Die in den Figuren 9 und 10 dargestellte, aus Einzelteilen des Bausatzes in einfachster Weise durch Aufsetzen und Spannen von Teilen erstellte Montagevorrichtung, gestattet eine Einstellung des Werkstückes in weiten Grenzen durch Drehung um eine Vertikalachse im Teil 16, durch Einstellung des Teils 21 in Vertikalrichtung am Teil 19, und durch Drehen des Blockes 24 gegenüber dem Block 22 um zwei rechtwinklig zueinander stehende Achsen. Diese Kette von Montageteilen kann zum Auswechseln eines Werkstücks oder dergleichen an beliebiger Stelle unterbrochen werden, nämlich entweder zwischen den Teilen 18 und 19 oder zwischen dem Teil 21 und einem der Teile 26, 5 oder 30, und ein neues Werkstück kann in genau vorgegebener Lage wieder eingesetzt und gespannt werden. Man wird also in vielen oder allen Fällen mit sehr kurzen Einrichtzeiten und entsprechend kurzen Stillstandzeiten auf der Maschine auskommen.

In Figur 9 sind Hilfsvorrichtungen zur genauen Einstellung des Teils 22 längs der Führung 20 angedeutet. In

Figur 9 oben ist eine Mikrometerspindel 32 angedeutet, die mit einer auf die Oberseite des Teils 19 aufgelegten Platte 33 verschraubt ist. Mit ihrer Hilfe kann die Position des Blocks 22 am Teil 19 genau bestimmt werden, vorausgesetzt dass die entsprechenden Flächen der Teile genügend genau bearbeitet sind. In Figur 9 unten ist angedeutet, dass zwischen eine gegen die untere Stirnseite des Teils 19 angelegte Platte 34 und die Unterseite des Blocks 22 ein Endmass 35 eingesetzt ist, um die Lage des Blocks 22 am Teil 19 genau zu bestimmen. Wiederum ist hier Voraussetzung, dass die entsprechenden Flächen der Teile 19 und 22 sehr genau bearbeitet sind.

In Figur 11 ist ein weiteres Verwendungsbeispiel des Bausatzes angedeutet. Auf die Unterlage 25 ist der Basisteil 1 montiert, mit welchem der Anpassteil 13 gekuppelt ist. Mit dem Anpassteil 13 ist wiederum eine Nutenplatte 36 mit einem Kupplungsteil 37 gekuppelt. Auf diesen als Nutenplatte ausgebildeten Träger 36 ist ein winkelförmiges Werkstück 38 mittels einer Spannbride 39 und eines Auflagekeils 40 in bestimmter Position montiert. Es ist angenommen, dass die Nutenplatte 36 mit dem darauf montierten Werkstück ein erhebliches Gewicht aufweist, was das Auswechseln schwierig macht. Zur Erleichterung dieses Vorgangs ist in diesem Falle zwischen den Teilen 13 und 37 eine Halteklinke 41 angeordnet, welche beim Aufsetzen des Kupplungsteils 37 in eine Ausnehmung desselben eingreift, und ihn provisorisch am Teil 13 sichert. Die Bedienungsperson braucht somit die Nutenplatte 36 mit dem Werkstück nicht mehr zu halten und bekommt die Hände frei zur Betätigung des Spannmechanismus zwischen den Teilen 13 und 37.

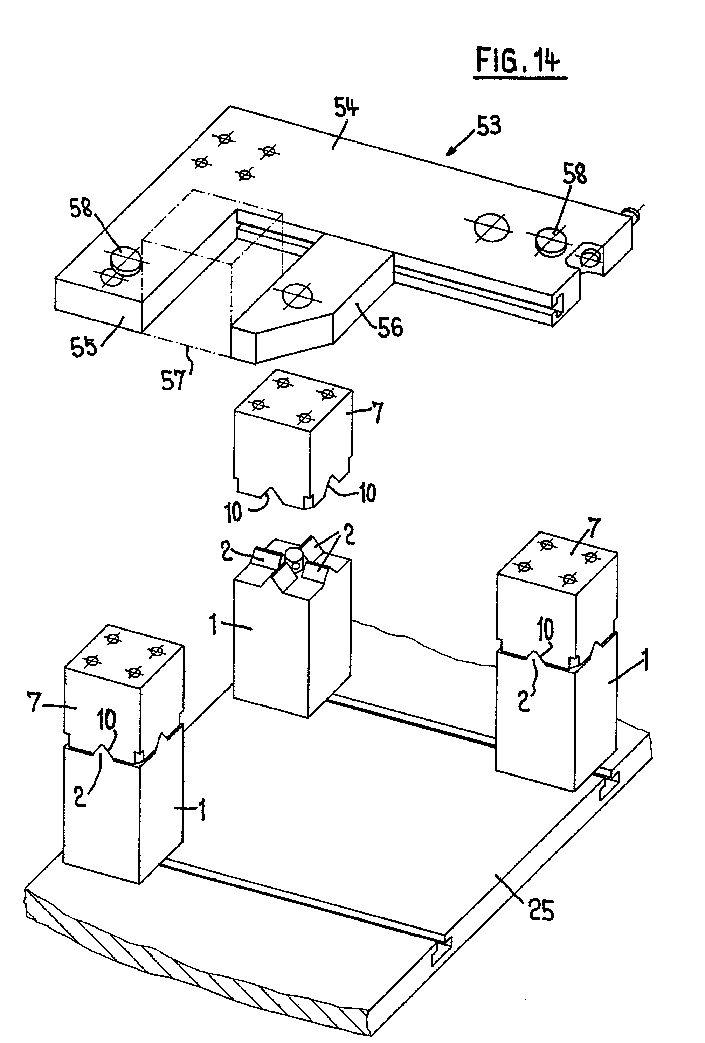

Die Figuren 12 und 13 zeigen die Montage eines verhältnismässig grossen schweren plattenförmigen Werkstücks 42. Für diesen Zweck sind im Bausatz Träger 43 vorhanden, auf deren Stützschulter 44 die Platte 42 aufliegt.

Wie nur in Figur 12 links dargestellt, können Spannbriden 43a und Spannklötze 43b vorgesehen sein. Die Träger 43 weisen je einen Kupplungsteil 45 auf, der im Beispiel mit je einem Basisteil 1 gekuppelt ist. Die Basisteile 1 sind mit der Unterlage 25, beispielsweise einer Nutenplatte, einer Bearbeitungsmaschine verbunden. Wie in Figur 12 rechts gezeigt, weisen die Träger 43 je eine untere Platte 46 mit einem Langloch oder Schlitz 47 auf, und sie sind somit mit den Kupplungsteilen 45 in Längsrichtung des Loches 47 einstellbar verschraubt. Auf der unteren Platte 46 ist mittels einer Rolle 48 ein Oberteil 49 des Trägers mit der Schulter 44 um die Rolle 48 schwenkbar verbunden. Die Schwenkstellung wird hierbei durch eine Stellschraube 50 bestimmt und kann fein eingestellt werden. Eine Feder 52 hält den Oberteil 49 in spielfreier Anlage an der Stellschraube 50 für den Fall, dass das Eigengewicht der Platte 42 diese Anlage nicht gewährleistet.

Wie aus Figur 13 ersichtlich, sind an drei Ecken der Platte 42 Träger 43 angeordnet, so dass sich eine statisch bestimmte Dreipunktauflage ergibt. Eine Höhenverstellung des Trägers rechts oben in Figur 13 resultiert in einer Einstellbewegung der Platte 42 um die unverändert bleibenden Auflagen in Figur 13 unten. Wird dagegen das Niveau des Trägers 43 bzw. der Plattenecke in Figur 13 links unten verändert, ergibt sich eine Einstellung der Platte um die rechtsliegenden beiden Auflagen. Die Platte kann in dieser Weise in jeder Richtung fein eingestellt werden. Natürlich kann, wie oben beschrieben, in an sich bekannter Weise diese Feineinstellung an entsprechenden Basisteilen 1 ausserhalb der Maschine erfolgen, damit nach dem Einsetzen je eines neuen Werkstückes in der Maschine selbst keine Einstellung mehr erforderlich ist. Die Figuren 12 und 13 können also eben so gut eine derartige ausserhalb der eigentlichen Bearbeitungsmaschine befindliche Einstellvorrichtung als auch die Montagevorrichtung in der Maschine selbst darstellen. Mit anderen Worten ist der Bausatz nicht nur dazu geeig-net, Montagevorrichtungen in eigentlichen Bearbeitungs-maschinen aufzubauen, sondern es können entsprechende Montagevorrichtungen ausserhalb von Maschinen zwecks Arbeitsvorbereitung in eben erwähnten Sinne aufgebaut werden.

Ist eine Anordnung gemäss Figuren 12 und 13 mit einer Dreipunktauflage in drei Ecken des Werkstückes zu unstabil, können entweder mehr Halter vorgesehen sein oder der in Figur 13 links liegende Halter kann in der Mitte der Platte angeordnet werden.

Figur 14 zeigt ein weiteres Verwendungsbeispiel. Auf einer Unterlage 25 sind wiederum drei Basisteile 1 montiert. Sie dienen der Montage eines flachen Schraubstokkes 53 gemäss CH-PS 642 585, mit einem L-förmigen Träger 54, mit einer festen Klemmbacke 55 sowie mit einer beweglichen Klemmbacke 56. In diesem Schraubstock ist ein in strichpunktierten Linien angedeutetes Werkstück 57 eingespannt. Mit dem Eckpunkt des L-förmigen Trägers wird, wie in Figur 14 angedeutet, ein Anpassungsteil oder Träger 7 gemäss Figur 2 fest verschraubt. Er dient zur Kupplung des Schraubstocks in bestimmter Lage und Richtung mit dem einen Basisteil 1. Auf die zwei übrigen Basisteile 1 ist ebenfalls je ein Anpassungsteil 7 aufgesetzt. An den Enden der Schenkel des Trägers des Schraubstocks 53 sind Nivelierschrauben 58 eingesetzt, deren untere Enden beim montierten Schraubstock auf die Oberseiten der beiden zugeordneten Teile 7 aufliegen.

Wie schon erwähnt sind die Oberseiten dieser Teile 7 genau plan bearbeitet und ergeben eine präzise Auflage des Schraubstockes, und sie gestatten eine genaue Ausrichtung und Nivelierung des Schraubstockes mit Hilfe der Schrauben 58. Zum Auswechseln eines Werkstückes braucht lediglich der mit dem Schraubstock verschraubte Kupplungsteil 7 durch einfachen Handgriff vom zugeordneten Basisteil 1 getrennt zu werden und es kann ein anderer Schraubstock mit einem neuen Werkstück eingesetzt werden. Wie oben erwähnt kann auch in diesem Falle der Schraubstock auf entsprechenden Auflagen vorbereitet worden sein, damit nach dem Kuppeln des Schraubstockes mit dem einen Basisteil 1 die Position des Werkstückes in der Bearbeitungsmaschine endgültig und korrekt bestimmt ist und weitere Einrichtungsarbeiten unnötig sind.

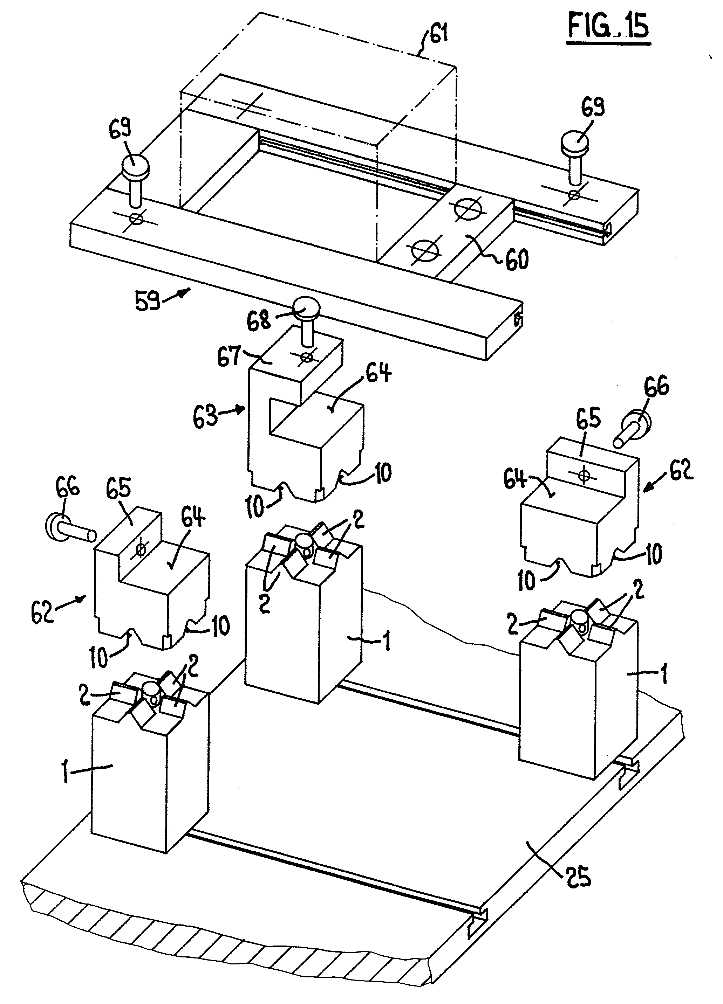

In Figur 15 ist ein weiteres Verwendungsbeispiel des Bausatzes mit weiteren Einzelteilen desselben dargestellt. Wiederum sind auf einem Maschinentisch 25 drei Basisteile 1 befestigt. Sie dienen der Montage einer Rahmenpalette 59 mit einer beweglichen Spannbacke 60 zum Spannen eines strichpunktiert dargestellten Werkstücks 61. Zur Montage dieser Rahmenpalette 59 sind spezielle Kupplungselemente oder Träger 62 bzw. 63 vorgesehen. Die Träger 62 weisen an der Unterseite Kupplungsnuten 10 und an der Oberseite eine plan bearbeitete Auflagefläche 64 auf. Einseitig dieser Auflagefläche 64 ragt eine Halteleiste 65 auf, mit der je eine Stellschraube 66 verschraubt ist. Der Träger 63 ist gleich ausgebildet wie die Träger 62, doch ist anstelle der Stützleiste 65 ein Haltebügel 67 vorgesehen, in welchem von oben eine Stellschraube 68 eingeschraubt ist. Im montiertem Zustand sind die Träger 62 und 63 mit den Basisteilen 1 gekuppelt, und die Rahmenpalette liegt auf den Flächen 64 der Träger 62 mit Stellschrauben 69 bzw. des Trägers 63 direkt je in genaue Position auf, womit die Position des Werkstücks 61 durch die Stellschrauben 66, 68 und 69 fein eingestellt werden kann, wobei mittels der Stellschrauben 66 eine gewisse Verschwenkung um eine Vertikalachse und mittels der Stellschraube 68 eine gewisse Nivellierung bzw. Ausrichtung in eine Horizontalebene möglich ist.

Alle Anwendungsbeispiele nach Figuren 9 bis 15 zeigen, dass das Werkstück nur seitlich gehalten, also oben und unten, frei ist. Die dargestellten Montagevorrichtungen eignen sich daher speziell auch dann, wenn der Raum über und unter einem zu bearbeitenden Werkstück frei bleiben muss, wie es beispielsweise bei Drahterosionsmaschinen Bedingung ist. Der beschriebene Bausatz und seine Verwendungsmöglichkeiten sind jedoch nicht auf dieses Beispiel beschränkt. Der Schraubstock gemäss 14 ist beispielsweise eher für flache Werkstücke geeignet während hohe Werkstücke geringen Querschnitts unter Umständen nicht genügend stabil gespannt werden könnten. Für derartige Werkstücke können andere verfügbare Maschinenschraubstöcke mit längeren Spannbacken verwendet werden. Generell kann gesagt werden, dass beliebige Spannmittel für typische Werkstücke oder andere zu montierende Teile mit Kupplungsmitteln versehen werden können um mit den übrigen Teilen des Bausatzes gekuppelt zu werden. Das Anwendungsgebiet geht über Bearbeitungs- und Werkzeugmaschinen sowie die Montage von Werkstücken oder Werkzeugen hinaus, und er kann beispielsweise im Zusammenhang mit Mess- oder Prüfvorrichtungen verwendet werden.

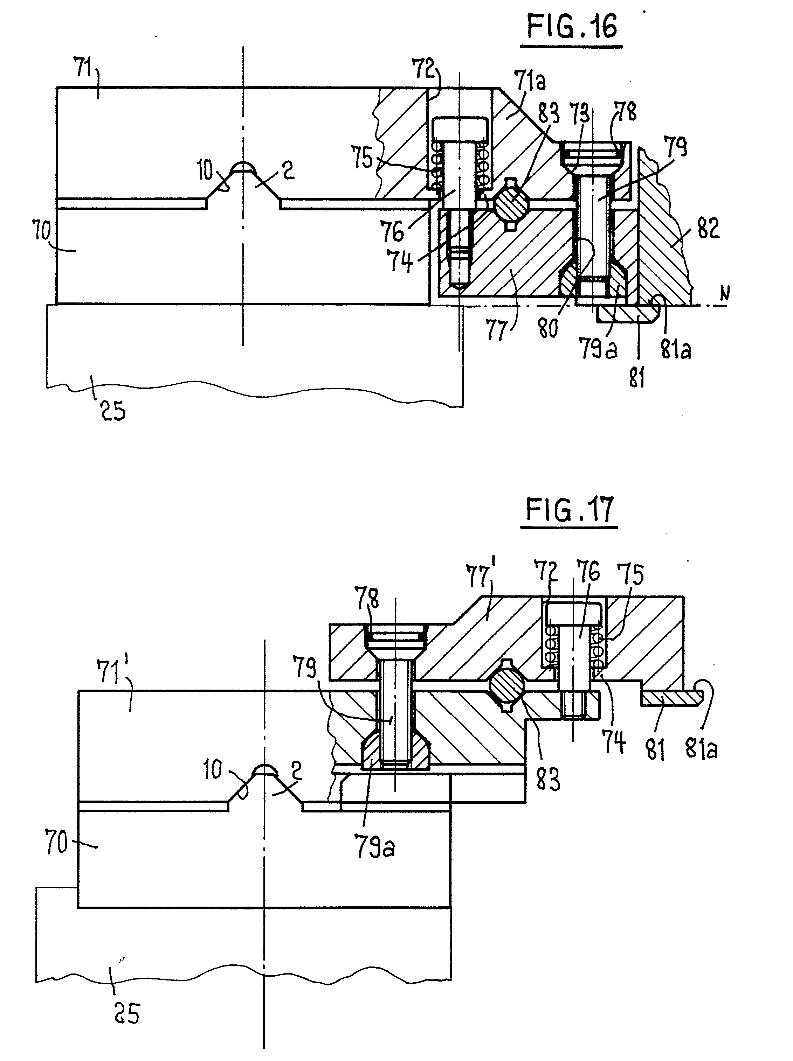

Die Figuren 16 und 17 zeigen zwei weitere Beispiele von Teilen zur Montage von Werkstücken, insbesondere in Elektroerosionsmaschinen. In beiden Fällen ist ein relativ flacher Basisteil 70 vorhanden, der mit einer Basis 25 verbunden ist. Er weist an der Oberseite Prismen 2 auf, die dem Kuppeln des Basisteiles 70 mit einem mit Nuten 10 versehenen Montageteil 71 (Fig. 16) dient. Die Art der Verbindung dieser Teile ist oben beschrieben. Der Montageteil 71 gemäss Fig. 16 weist einen sich nach aussen verjüngenden Fortsatz 71a auf, der mit Bohrungen 72 und 73 versehen ist. Die Bohrung 72 hat unten eine Schulter 74, auf welcher sich eine Druckfeder 75 abstützt. Das andere Ende der Druckfeder 75 stützt sich am Kopf einer Schraube 76 ab, die mit einer Montageplatte 77 verschraubt ist. In die andere Bohrung 73 ist eine Schraube 79 mittels eines O-Rings 78 dichtend eingesetzt. Das andere Ende der Schraube 79 ist mit einer Mutter 79a verschraubt, die sich an einem konischen Teil einer Bohrung 80 der Montageplatte 77 abstützt. Mit der Montageplatte 77 ist eine Richtleiste 81 verbunden, deren genau bearbeitete Fläche 81a der Bestimmung des Niveaus der Unterseite eines mit der Montageplatte 77 verbundenen Werkstücks 82 dient. Zwischen den Fortsatz 71a und die Montageplatte 77 ist ein Lagerbolzen 83 eingelegt, um welchen sich die Montageplatte 77 mit dem daran befestigten Werkstück 82 gegenüber dem Fortsatz 71a bzw. dem Montageteil 71 verschwenken kann. Mittels der Schraube 79 kann die Neigung der Platte 77 und des damit verbundenen Werkstücks 82 innerhalb gewisser Grenzen fein eingestellt werden, wobei die Feder 75 stets für eine spielfreie gegenseitige Auflage der Teile 71a, 83 und 77 mit Vorspannung sorgt. Gemäss Fig. 6 befindet sich die Auflagefläche 81a auf demselben Niveau wie die Auflagefläche der Basis 25.

In Fig. 17 sind Teile entsprechender Funktion gleich bezeichnet wie in Fig. 16. Der Montageteil 71' ist so ausgebildet, dass eine Montageplatte 77' über statt gemäss Fig. 16 unter dem Montageteil angeordnet werden kann. Damit liegt das Niveau der Montagefläche 81a über dem Niveau der Auflagefläche der Basis 25.

In beiden Ausführungen nach Fig. 16 und 17 kann der Montageteil 70 auch einstellbar, z.B. drehbar, statt fest mit der Basis 25 verbunden sein. Beide Ausführungen gemäss Fig. 16 und 17 sind ausserdem speziell geeignet für eine Vormontage eines Werkstücks in genau vorbestimmter Lage ausserhalb einer Bearbeitungsmaschine und ein nachträgliches Einsetzen in dieselbe in ebenso genau definierter Lage durch einfaches, schnelles Kuppeln der Teile 70 und 71 bzw. 71'.

Patentansprüche

1. Baùsatz zur Montage von Teilen, insbesondere von Werkstücken, insbesondere in Elektroerosionsmaschinen, mit auf einer Basis fest montierbaren Basisteilen (1, 16), die in eindeutiger Lage und Orientierung mit Trägern (26, 5, 30) für die Teile kuppelbar sind, dadurch gekennzeichnet, dass Anpassteile (7, 13, 14, 15, 21) vorgesehen sind, die zwischen Basisteile (1, 16) und Träger (5,26, 30) einsetzbar und mit denselben in eindeutiger Lage und Orientierung kuppelbar sind.

2. Bausatz nach Anspruch 1, dadurch gekennzeichnet, dass Anpassteile (13, 14, 21) vorgesehen sind, die an mindestens zwei rechtwinklig zueinander liegenden Seiten Kupplungsmittel (2, 10) zum Kuppeln mit Basisteilen, Trägern oder anderen Anpassteilen aufweisen.

3. Bausatz nach Anspruch 1 oder 2, dadurch gekennzeichnet, dass Basisteile (16) und/oder Anpassteile (21) und/oder Träger vorgesehen sind, die je zwei drehbar verbundene Elemente aufweisen.

4. Bausatz nach Anspruch 3, dadurch gekennzeichnet, dass eines der Elemente (18) als Kupplungsteil und das andere Element (17) als Montageteil zur Verbindung mit der Unterlage oder einen zu montierenden Teil, z.B. Werkstück, ausgebildet ist.

5. Bausatz nach einem der Ansprüche 1 - 4, dadurch gekennzeichnet, dass mindestens ein Führungsteil (19) mit mindestens einer Führung, z.B. Schwalbenschwanzführung (20) sowie mindestens ein mit der Führung kuppelbarer und längs derselben einstellbarer Anpassteil (21) vorgesehen sind.

6. Bausatz nach Anspruch 5, dadurch gekennzeichnet, dass der Führungsteil (19) als Winkel mit zwei rechtwinklig zueinander stehenden Schenkeln ausgebildet ist, wobei beide Schenkel mit Kupplungsmittel (2, 10) versehen sind.

7. Bausatz nach einem der Ansprüche 1 - 6, dadurch gekennzeichnet, dass Träger (43) mit einem Kupplungselement (45) und einem fein einstellbaren Halteelement (49) vorgesehen sind.

8. Bausatz nach einem der Ansprüche 1 - 7, dadurch gekennzeichnet, dass Teile (7, 13, 14, 19, 21) mit plan bearbeiteten Auflageflächen und auch mit Gewindebohrungen zur Befestigung von Teilen versehen sind.

9. Bausatz nach einem der Ansprüche 1 - 8, dadurch gekennzeichnet, dass Träger (43, 53, 59, 62, 63, 71, 71') mit Einstellmitteln, z.B. Einstellschrauben (50, 58, 66, 68, 79) vorgesehen sind.

10. Verwendung des Bausatzes nach Anspruch 1, dadurch gekennzeichnet, dass als Täger eine Spannvorrichtung, z.B. ein Schraubstock (53) oder eine Rahmenpalette (26, 59) mit einem Basis- oder Anpassteil gekuppelt wird.

11. Verwendung nach Anspruch 10, dadurch gekennzeichnet, dass ein flacher, U-förmiger Schraubstock (53) an einer Stelle in bestimmter Lage und Orientierung mit einem Basis- oder Anpassteil gekuppelt und an zwei weiteren Stellen auf plan bearbeitete Flächen von Basis- oder Anpassteilen (7) abgestützt ist.

0203888

12. Verwendung nach Anspruch 10, dadurch gekennzeichnet, dass der Schraubstock (53) an den weiteren Stellen mittels einstellbarer Elemente, z.B. Stellschrauben (58) abgestützt ist.

0203888

FIG.1

FIG.1a

FIG.6

FIG.2

FIG.5

FIG.4

0203888

**FIG.3**

**FIG.7**

**FIG.8**

**FIG.11**

0203888

**FIG.9**

**FIG.10**

0203888

## FIG.12

## FIG.13

### FIG. 14

FIG. 15

FIG.16

FIG.17

# 0203888
Nummer der Anmeldung

## EUROPÄISCHER RECHERCHENBERICHT

Europäisches
Patentamt

EP 86 81 0211

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 587 448 (WHARTON) <br> * Seite 5, Zeilen 29-130; Seite 6, Zeilen 1-59,95-119; Seite 7, Zeilen 91-105; Figuren 1-7,9,10,16 * <br><br> --- | 1-5,8 | B 23 Q 3/10 |
| A | DE-A-2 408 350 (MAUSER-SCHAERER) <br><br> --- | | |
| A | DE-A-2 356 343 (HALDER) <br><br> --- | | |
| A | GB-A- 852 792 (WHARTON) <br><br> --- | | |
| A | FR-A-1 240 320 (WHARTON) <br><br> --- | | RECHERCHIERTE SACHGEBIETE (Int. Cl.4) |
| A | US-A-2 676 413 (WHARTON) <br><br> ----- | | B 23 Q 3/00 |

Der vorliegende Recherchenbericht wurde für alle Patentansprüche erstellt.

| Recherchenort <br> DEN HAAG | Abschlußdatum der Recherche <br> 30-07-1986 | Prüfer <br> BOGAERT F.L. |
|---|---|---|